# EUROPEAN PATENT SPECIFICATION

(11) **EP 3 993 150 B1**
(45) Date of publication and mention of the grant of the patent: **02.04.2025**
(21) Application number: 21204819.3
(22) Date of filing: 26.10.2021
(51) Int. Cl.: H01M 50/502, H01M 50/543, H01M 50/581

(54) **SECONDARY BATTERY**
SEKUNDÄRBATTERIE
BATTERIE SECONDAIRE

(30) Priority: 27.10.2020 KR 20200139876
(43) Date of publication of application: 04.05.2022
(73) Proprietor: SK On Co., Ltd., Seoul 03161 (KR)
(72) Inventor: HWANG, Chang Mook, 34124 Daejeon (KR); KIM, Ji Hyung, 34124 Daejeon (KR); RYU, Gyeong Min, 34124 Daejeon (KR); MOON, Sin Young, 34124 Daejeon (KR); JO, Yoon Ji, 34124 Daejeon (KR)
(74) Representative: Stolmár & Partner Patentanwälte PartG mbB

(56) References cited:
- KR-A- 20200 028 712
- KR-A- 20200 065 193
- KR-A- 20200 065 948
- US-A1- 2018 164 002

## Description

### [BACKGROUND OF THE INVENTION]

### 1. Field of the Invention

The present invention relates to a secondary battery, and more specifically, to a secondary battery including a case which receives an electrode assembly.

### 2. Description of the Related Art

Secondary batteries capable of being charged and discharged have been developed and studied as power sources for high-tech devices such as a digital camera, a cellular phone, a laptop computer, a hybrid automobile and the like. Examples of the secondary battery include a nickel-cadmium battery, a nickel-metal hydride battery, a nickel-hydrogen battery, and a lithium secondary battery. Among them, the lithium secondary battery is widely used in terms of operating voltage and energy density per unit weight.

As the secondary battery is repeatedly charged and discharged, performance such as output and capacity may be gradually deteriorated. For example, operating characteristics of the secondary battery may be deteriorated by decomposition of active materials and electrolyte during storage or charging and discharging of the secondary battery, by-products due to a reaction between the active materials and the electrolyte and the like.

In addition, as a high current flows in electrode tabs of the secondary battery having a relatively narrow width, a temperature thereof may be rapidly increased. In this case, heat generated from the electrode tabs is transferred to a pouch for the secondary battery, which may cause a damage in the pouch.

In this case, the electrolyte may leak from the secondary battery, and as the temperature of the pouch for the secondary battery is increased, a side reaction in the electrolyte may additionally occur.

For example, Korean Patent Application Publication No. 10-2018-0023817 discloses a pouch type secondary battery in which a battery cell housing part is formed in a pouch film through a pressing process, and a battery cell is received in the housing part. Korean Patent Laid-Open Publication No. 10-2020-0065193 discloses a thermoelectric device disposed on a lead junction part operated when a module is overcharged, but fails to disclose a cooling unit for each battery cell.

### [Prior Art Document]

### [Patent Document]

Korean Patent Laid-Open Publication No. 10-2018-0023817
Korean Patent Laid-Open Publication No. 10-2020-0065193

### [SUMMARY OF THE INVENTION]

One object according to embodiments of the present invention is to provide a secondary battery having improved mechanical stability and operational reliability.

To achieve the above object, according to an aspect of the present invention, there is provided a secondary battery including: an electrode assembly which may include a plurality of electrodes and a separation membrane disposed between the electrodes; a case configured to receive the electrode assembly; electrode tabs which are connected with the electrodes and protrude to an outside of the case; and a thermoelectric unit configured to at least partially cover the electrode tab, wherein the thermoelectric unit includes: an insulator; and a thermoelectric region which includes thermoelectric elements included in the insulator or attached to the insulator, and is disposed to be overlapped with the electrode tab in a planar direction.

In some embodiments, the insulator may include a first insulator which covers an upper surface of the electrode tab and a second insulator which covers a lower surface of the electrode tab, and the thermoelectric region may include a first thermoelectric region formed in the first insulator and a second thermoelectric region formed in the second insulator.

In some embodiments, the thermoelectric unit may further include a hinge part configured to couple the first insulator and the second insulator, wherein the thermoelectric unit is folded through the hinge part so that the first thermoelectric region and the second thermoelectric region are disposed to face each other with the electrode tab interposed therebetween.

In some embodiments, the thermoelectric unit may further include a support disposed on the case to fix the thermoelectric unit.

In some embodiments, the thermoelectric unit may further include a third thermoelectric region including thermoelectric elements which are included in the support or attached to the support.

In some embodiments, the third thermoelectric region may cover a portion of the electrode tab included in the case in the planar direction.

In some embodiments, the case may include a sealing part fused with the electrode tab, and the third thermoelectric region may cover the sealing part in the planar direction.

In some embodiments, wherein each of the electrodes may include an electrode current collector and a notched part which protrudes from the electrode current collector and is connected with the electrode tab, and the third thermoelectric region at least partially may cover the notched part in the planar direction.

In some embodiments, the thermoelectric unit may further include a thermal conductive intermediate layer which is formed in the thermoelectric region, thus to be disposed between the electrode tab and the thermoelectric region.

In some embodiments, the thermal conductive intermediate layer may include thermal grease or heat transfer paste.

In some embodiments, the thermoelectric element may include a P-N diode.

According to exemplary embodiments, the secondary battery of the present invention includes the thermoelectric unit covering at least a portion of the electrode tab. The heat generated from the electrode tab during rapid charging of the secondary battery may be effectively cooled through the thermoelectric unit.

Accordingly, it is possible to effectively prevent a side reaction of the electrolyte due to overheating of the secondary battery during rapid charging, leakage of the electrolyte due to damage to the case and the like. In addition, by increasing heat dissipation and cooling rate through the thermoelectric elements, charging/discharging speed and efficiency of the secondary battery may be improved.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic plan view illustrating a secondary battery according to exemplary embodiments;
FIG. 2 is a schematic cross-sectional view illustrating an electrode assembly included in the secondary battery according to exemplary embodiments; and
FIGS. 3 and 4 are schematic plan views illustrating a thermoelectric unit included in the secondary battery according to exemplary embodiments.

### [DETAILED DESCRIPTION OF THE INVENTION]

According to exemplary embodiments of the present invention, there is provided a secondary battery including an electrode assembly, a case, electrode tabs, and a thermoelectric unit including thermoelectric elements which cover the electrode tabs.

Hereinafter, specific embodiments of the present invention will be described with reference to the accompanying drawings. However, these are merely illustrative examples and the present invention is not limited thereto.

In descriptions of the embodiments of the present invention, publicly known techniques that are judged to be able to make the purport of the present invention unnecessarily obscure will not be described in detail. Referring to the drawings, wherein like reference characters designate like or corresponding parts throughout the several views. In addition, the terms as used herein are defined by taking functions of the present invention into account and can be changed according to the custom or intention of users or operators. Therefore, definition of the terms should be made according to the overall disclosure set forth herein.

It should be understood that the technical spirit and scope of the present invention are defined by the appended claims, and the following embodiments are only made to efficiently describe the present invention to persons having common knowledge in the technical field to which the present invention pertains.

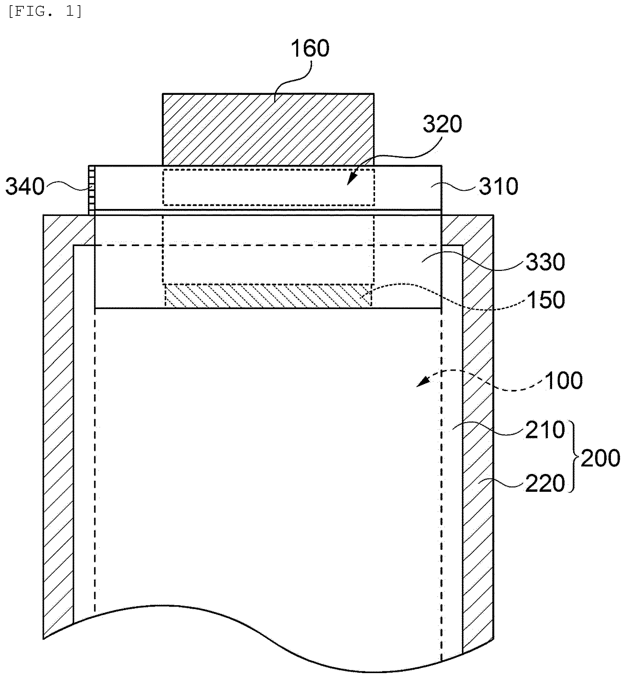

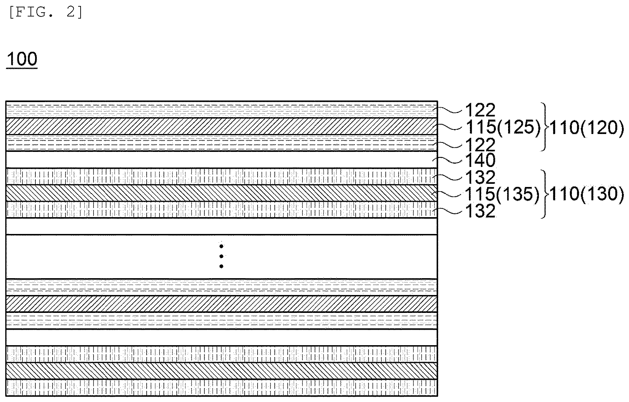

FIG. 1 is a schematic plan view illustrating a secondary battery according to exemplary embodiments, and FIG. 2 is a schematic cross-sectional view illustrating an electrode assembly included in the secondary battery according to exemplary embodiments.

Referring to FIGS. 1 and 2, the secondary battery may include an electrode assembly 100, a case 200, and a thermoelectric unit 300 including thermoelectric elements.

As shown in FIG. 2, the electrode assembly 100 may include repeatedly laminated electrodes 110 and a separation membrane 140 disposed between the electrodes 110. Each of the electrodes 110 may include an active material layer formed on an electrode current collector 115.

The electrodes 110 may include a cathode 120 and an anode 130. The electrode current collector 115 may include a cathode current collector 125 included in the cathode 120 and an anode current collector 135 included in the anode 130. The active material layer may include a cathode active material layer 122 included in the cathode 120 and an anode active material layer 132 included in the anode 130.

The cathode 120 may include the cathode current collector 125 and the cathode active material layer 122 formed by applying a cathode active material on the cathode current collector 125. The cathode active material may include a compound capable of reversibly intercalating and deintercalating lithium ions. In this case, the secondary battery may be provided as a lithium secondary battery.

In exemplary embodiments, the cathode active material may include lithium-transition metal composite oxide particles. For example, the lithium-transition metal composite oxide particles may include nickel (Ni), and may further include at least one of cobalt (Co) and manganese (Mn).

For example, the lithium-transition metal composite oxide particle may have a composition represented by Formula 1 below:

[Formula 1] LiₓNi_{1-y}M_{y}O_{2+z}

In Formula 1, x and y may be in a range of 0.9 ≤ x ≤ 1.1, and 0 ≤ y ≤ 0.7, and z may be in a range of -0.1 ≤ z ≤ 0.1, M may denote at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

In one embodiment, a molar ratio (1-y) of nickel in Formula 1 may be in a range of 0.8 to 0.95. In this case, it is possible to increase output and capacity of the secondary battery through a cathode composition of high-nickel (high-Ni) contents.

The cathode current collector 125 may include a metal material which has no reactivity in a charging/discharging voltage range of the secondary battery and facilitates application and adhesion of the electrode active material. For example, the cathode current collector 125 may include stainless steel, nickel, aluminum, titanium, copper, zinc, or an alloy thereof, and preferably includes aluminum or an aluminum alloy.

For example, a slurry may be prepared by mixing the cathode active material with a binder, a conductive material and/or a dispersant in a solvent, followed by stirring the same. The slurry may be coated on the cathode current collector 125, followed by compressing and drying to manufacture the cathode 120 including the cathode active material layer 122.

The binder may be selected from, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer may be reduced and an amount of the cathode active material may be relatively increased, thus to improve the output and capacity of the secondary battery.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as LaSrCoO₃, or LaSrMnO₃.

The anode 130 may include the anode current collector 135, and the anode active material layer 132 formed by applying an anode active material on the anode current collector 135.

As the anode active material, any active material known in the related art may be used, so long as it can absorb and desorb lithium ions. For example, carbon-based materials such as crystalline carbon, amorphous carbon, carbon composite, carbon fiber, etc., a lithium alloy, or a silicon (Si)-based active material may be used. Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

In one embodiment, the anode active material may include a silicon-based active material to implement a high-capacity lithium secondary battery. The silicon-based active material may include SiOx (0<x<2) or SiOx (0<x<2) containing a lithium (Li) compound. The SiOx containing the Li compound may be SiOx containing lithium silicate. The lithium silicate may be present in at least a portion of the SiOx (0<x<2) particles, for example, may be present inside and/or on a surface of the SiOx (0<x<2) particles. In one embodiment, the lithium silicate may include Li₂SiO₃, Li₂Si₂O₅, Li₄SiO₄, Li₄Si₃O₈ and the like.

The silicon-based active material may include, for example, a silicon-carbon composite compound such as silicon carbide (SiC).

The anode current collector 135 may include stainless steel, copper, nickel, aluminum, titanium, or an alloy thereof. Preferably, the anode current collector 135 includes copper or a copper alloy.

For example, the anode active material may be prepared in the form of a slurry by mixing it with the above-described binder, conductive material, and thickener in a solvent, followed by stirring the same. The slurry may be coated on at least one surface of the anode current collector 135, followed by compressing and drying to manufacture the anode 130 including the anode active material layer 132.

As the binder and the conductive material, materials which are substantially the same as or similar to the above-described materials used in the cathode active material layer 122 may be used. In some embodiments, a binder for forming the anode may include, for example, an aqueous binder such as styrene-butadiene rubber (SBR) for consistency with the carbon-based active material, and may be used together with a thickener such as carboxymethyl cellulose (CMC).

The separation membrane 140 may be interposed between the cathode 120 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

According to exemplary embodiments, an electrode cell may be defined by the cathode 120, the anode 130 and the separation membrane 140, and a plurality of electrode cells may be laminated to define the electrode assembly 100.

For the convenience of illustration, the electrode assembly 100 is shown as a laminate type in FIG. 2, but the electrode assembly 100 may have a jelly-roll structure formed by, for example, winding or folding the separation membrane 140.

The electrode assembly 100 may be received together with the electrolyte in the case 200 to define a secondary battery. According to exemplary embodiments, a non-aqueous electrolyte may be used as the electrolyte.

The case 200 may be provided in the form of a pouch, for example. The case 200 may have a multilayer structure in which a plurality of insulation layers are laminated. The case 200 may include a metal layer inserted between the insulation layers.

The non-aqueous electrolyte includes a lithium salt as an electrolyte and an organic solvent. The lithium salt is represented by, for example, Li⁺X⁻ and may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃) ₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and the like as an example.

Examples of the organic solvent may use any one of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane and the like. These compounds may be used alone or in combination of two or more thereof.

The case 200 may include a housing part 210 into which the electrode assembly 100 is received together with the non-aqueous electrolyte and a sealing part 220.

For example, the housing part 210 may have a recess shape formed by pressing a portion thereof from the sealing part 220 to a predetermined depth in a thickness direction. The electrode assembly 100 may be received into the housing part 210.

In some embodiments, the housing part 210 may be divided into a first housing part which covers an upper surface of the electrode assembly 100 and a second housing part which covers a lower surface of the electrode assembly 100. For example, the electrode assembly 100 may be disposed on a bottom of the second housing part, and the first housing part may be disposed on the electrode assembly 100. Thereafter, peripheral portions of the first and second housing parts may be fused together to form the sealing part 220.

In one embodiment, a folding part may be formed between the first housing part and the second housing part. The electrode assembly 100 may be received in the case 200 by folding up the first housing part over the electrode assembly 100 through the folding part. In this case, three edges among four edges of the case 200 may form the sealing part 220.

A notched part 150 may protrude from each electrode current collector 115 included in each of the electrodes 110. As shown in FIG. 1, the notched part 150 may have a shape which protrudes from the electrode assembly 100 and extends in a planar direction, and a plurality of notched parts 150 may be arranged to be overlapped with each other in the thickness direction of the electrode assembly 100.

For example, cathode notched parts may protrude from the cathode current collectors 125 to be aligned, and anode notched parts may protrude from the anode current collectors 135 to be aligned. The notched part 150 shown in FIG. 1 may be the cathode notched part or the anode notched part.

The electrode tab 160 may be merged or fused together with the notched parts 150. For example, distal ends of the notched parts 150 may be fused together to be connected with the electrode tab 160. Accordingly, a cathode electrode tab and an anode electrode tab may be formed, respectively.

The electrode tab 160 may be sealed together with the sealing part 220 of the case 200. As shown in FIG. 1, a portion of the electrode tab 160 may be exposed to an outside of the sealing part 220 to be provided as an electrode lead. A portion of the electrode tab 160 may be included in the sealing part 220, and a portion of the electrode tab 160 may be located in the housing part 210.

In one embodiment, an insulation film (not illustrated) may be interposed between the electrode tab 160 and the sealing part 220. Thereby, even when the case 200 is damaged, insulation between the electrode tab 160 and the case 200 may be maintained, and adhesion between the electrode tab 160 and the sealing part 220 may be enhanced.

For example, the electrode tab 160 may include metals which are substantially the same as or similar to metals to be included in the electrode current collector 115.

For example, the electrode tab 160 may have a thickness of about 0.1 mm to about 1.0 mm. Preferably, the electrode tab 160 has a thickness of 0.3 mm to 0.7 mm. Within the above-described range, cooling/heat dissipation through the thermoelectric element included in the thermoelectric unit 300 to be described below may be effectively implemented.

According to exemplary embodiments, the thermoelectric unit 300 may be disposed to cover the electrode tab 160. In some embodiments, the thermoelectric unit 300 may cover a portion of the case 200 and a portion of the electrode tab 160 together, which are exposed to the outside of the case 200.

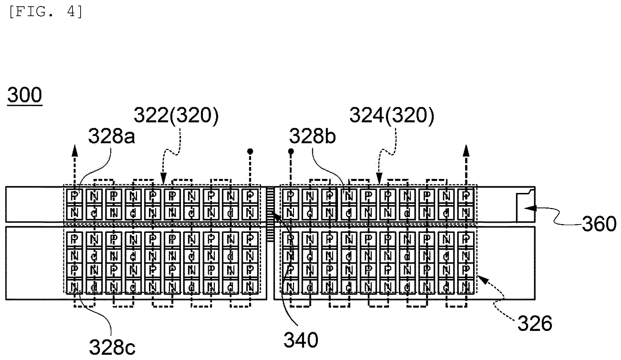

The thermoelectric unit 300 may include an insulator 310 including a thermoelectric region 320. Thermoelectric elements 328a, 328b and 328c (see FIG. 4) may be distributed in the thermoelectric region 320.

For example, the insulator 310 may include polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyallylate, Teflon and the like. These materials may be used alone or in combination of two or more thereof.

The insulator 310 may have a single film or multilayer structure including the above-described material.

The thermoelectric element included in the thermoelectric region 320 may include, for example, a semiconductor element which converts thermal energy into electric energy or vice versa by the Peltier effect. For example, as shown in FIG. 4, the thermoelectric element may have a diode structure in which a P-type semiconductor and an N-type semiconductor are combined.

The thermoelectric element may effectively dissipate heat generated from the electrode tab 160 to cool the same during charging/discharging of the secondary battery. For example, the thermoelectric elements 328a, 328b and 328c may cool the electrode tab 160 by moving heat generated from the electrode tab 160 to the outside as current flows.

For example, in a high speed charging process, heat rapidly increasing from the electrode assembly 100 may be absorbed from the electrode tab 160 and rapidly converted into a current in the thermoelectric region 320, thus to effectively cool the electrode assembly 100 or the electrode tab 160 Accordingly, it is possible to facilitate the repetition of high-speed charging/discharging while increasing discharge efficiency.

In addition, charge efficiency may be enhanced by supplying the current converted in the thermoelectric region 320 back to the charging process.

As shown in FIG. 1, the thermoelectric region 320 may at least partially come into contact or be overlapped with a portion of the electrode tab 160 exposed to the outside. Accordingly, heat concentration in the electrode tab 160 having a relatively narrow width may be quickly relieved or dissipated, and an increase in the resistance due to a thermal damage in the electrode tab 160 may be prevented.

In some embodiments, the thermoelectric region 320 may also be overlapped with a portion of the electrode tab 160 disposed in the case 200 in the planar direction, and may also be overlapped with the notched part 150. In this case, the thermoelectric region 320 may cover the sealing part 220 of the case 200 in which the electrode tab 160 is sealed.

Accordingly, it is possible to prevent the electrolyte from leaking due to the thermal damage to the sealing part 220 while suppressing the thermal damage at a junction part of the electrode tab 160 and the notched part 150.

In one embodiment, the thermoelectric region 320 may also be partially overlapped with the electrode assembly 100 in the planar direction.

The thermoelectric unit 300 may include a support 330 for coupling and fixing the thermoelectric unit 300 on the case 200. As described above, the support 330 may also include the thermoelectric region 320 to be overlapped with the electrode tab 160 and the notched part 150 in the case 200.

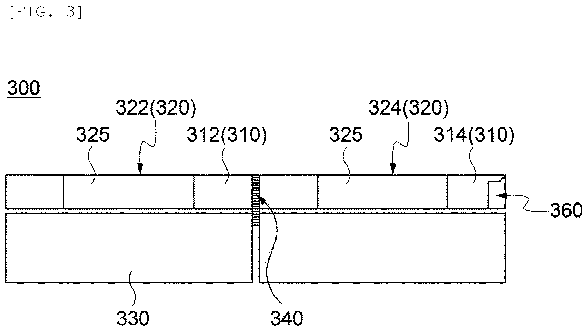

FIGS. 3 and 4 are schematic plan views illustrating the thermoelectric unit included in the secondary battery according to exemplary embodiments.

Referring to FIGS. 3 and 4, the insulator 310 of the thermoelectric unit 300 may include a first insulator 312 and a second insulator 314 coupled to be folded by a hinge part 340. The thermoelectric region 320 may include a first thermoelectric region 322 and a second thermoelectric region 324.

The first thermoelectric region 322 may be buried in the first insulator 312 or formed on the first insulator 312. The second thermoelectric region 324 may be buried in the second insulator 314 or formed on the second insulator 314.

As described above, the thermoelectric elements may be distributed in the thermoelectric region 320. As shown in FIG. 4, first thermoelectric elements 328a may be distributed in the first thermoelectric region 320 and second thermoelectric elements 328b may be distributed in the second thermoelectric region 324. The thermoelectric element may have a P-N diode structure.

The first insulator 312 and the second insulator 314 may be folded through the hinge part 340 to face each other with the electrode tab 160 interposed therebetween. Thereby, a cooling effect is realized through the thermoelectric elements 328a and 328b together on the upper and lower surfaces of the electrode tab 160, thus to facilitate rapid cooling.

A holding part 360 may be formed at a distal end of the first insulator 312 or the second insulator 314 to fix the first insulator 312 or the second insulator 314 folded to face each other.

In some embodiments, as shown in FIG. 3, a thermal conductive intermediate layer 325 which covers the thermoelectric region 320 may be further formed. The thermal conductive intermediate layer 325 may be disposed between the thermoelectric region 320 and the electrode tab 160 while covering the thermoelectric elements.

For example, the thermal conductive intermediate layer 325 may fill a gap between the thermoelectric elements and the electrode tab 160. Accordingly, it is possible to prevent a mechanical damage to the electrode tab 160 which may occur when the thermoelectric elements directly collide with the electrode tab 160. In addition, it is possible to prevent an increase in the resistance due to direct contact between the electrode tab 160 and the thermoelectric elements, thereby preventing additional heat generation due to an increase in the contact resistance.

For example, the thermal conductive intermediate layer may be formed using a coating composition such as thermal grease, heat transfer paste or the like.

As described above, the thermoelectric unit 300 may include the support 330 disposed on the case 200 to fasten the thermoelectric unit 300 to the secondary battery. The support 330 may also be coupled to the hinge part 340 to be separated into, for example, a first support and a second support which come into contact with the upper and lower surfaces of the case 200, respectively.

In some embodiments, the support 330 may be connected to or merged with the insulator 310, and may include materials which are substantially the same as or similar to the insulator 310.

As shown in FIG. 4, the support 330 may include a third thermoelectric region 326, and third thermoelectric elements 328c may be distributed in the third thermoelectric region 326.

The thermoelectric elements 328a, 328b and 328c may be arranged to be connected in series or parallel to each other. As shown by dotted arrows in FIG. 4, when the thermoelectric elements 328a, 328b and 328c are connected in series with each other, as the current circulates or passes in a form of zigzag loop, a uniform cooling effect in the electrode tab 160 may be implemented as a whole.

Hereinafter, specific experimental examples are proposed to facilitate understanding of the present invention. However, the following examples are only given for illustrating the present invention and those skilled in the art will obviously understand that various alterations and modifications are possible within the scope of the present invention. Such alterations and modifications are duly included in the appended claims.

### Example 1

An electrode assembly including a cathode (a cathode active material: Li[Ni_{0.6}Co_{0.2}Mn_{0.2}]O₂), and a cathode current collector: Al base film having a thickness of 12 µm), an anode (an anode active material: a mixture of artificial graphite and natural graphite in a weight ratio of 9:1, an anode current collector: Cu base film having a thickness of 12 µm), and a separation membrane (polyethylene, thickness 25 µm) was prepared. A cathode notched part and an anode notched part formed on the current collectors were connected to an Al cathode tab and a Cu anode tab, respectively, and the electrode assembly was received in the pouch, followed by welding the cathode tab and the anode tab at edges of both ends of the pouch, respectively, to seal three edges of the pouch except for one edge into which an electrolyte is injected. After injecting the electrolyte through the remaining one edge of the pouch, the remaining one edge was sealed to seal all of the edges.

The electrolyte used herein was prepared by dissolving 1M LiPF₆ solution in a mixed solvent of EC/EMC/DEC (25/45/30; volume ratio), and adding 1 wt.% of vinylene carbonate (VC), 0.5 wt.% of 1,3-propene sultone (PRS), and 0.5 wt.% of lithium bis(oxalato)borate (LiBOB) thereto.

As shown in FIG. 1, a thermoelectric unit which covers the cathode tab was placed. Specifically, polyethylene terephthalate (PET) was used as an insulator and a support, and P-N diodes were attached to predetermined thermoelectric regions.

### Example 2

A secondary battery was manufactured according to the same procedures as described in Example 1, except that the thermoelectric unit was coupled to the anode tab.

### Example 3

A secondary battery was manufactured in the same manner as in Example 1, except that the thermoelectric units were coupled to both the cathode tab and the anode tab.

### Comparative example

A secondary battery was manufactured in the same manner as in Example 1, except that the thermoelectric unit was omitted.

### Experimental example

### (1) Measurement of temperature of electrode tap

A maximum temperature of the electrode tab was measured while charging the secondary batteries manufactured in the examples and the comparative examples from SOC0 to SOC80 (CCCV 4.1 V 5C-rate SOC80 cut-off).

### (2) Evaluation of charging time

A charging time from SOC0 to SOC80 was measured under the conditions described in (1) above.

### (3) Evaluation of cycle characteristics

The number of charging/discharging cycles of the secondary batteries that can be maintained up to SOH80 was measured while repeating one cycle of charging and discharging performed under the following conditions i) to iv).

### <Charging/discharging conditions>

i) Charging: CCCV 4.1 V 5C-rate SOC80 capacity cut-off
ii) Rest time: 10 min
iii) Discharging: CC 1/3C-rate 2.5 V cut-off
iv) Rest time: 10 min

The evaluation results are shown in Table 1 below.

**[TABLE 1]**

| | Maximum temperature of the electrode tab (°C) | Rapid charging time (min) | Cycle characteristics |
|---|---|---|---|
| Example 1 | 65 | 22 | 700 |
| Example 2 | 68 | 23 | 700 |
| Example 3 | 60 | 22 | 800 |
| Comparative example | 70 | 25 | 500 |

Referring to Table 1 above, in the case of the examples in which the thermoelectric unit were coupled to the cathode tab or the anode tab, the charging time was more shortened while decreasing the temperature of the electrode tab than in the comparative example, and the cycle characteristics were also improved.

## Claims

1. A secondary battery comprising:
an electrode assembly which comprises a plurality of electrodes and a separation membrane disposed between the electrodes;
a case configured to receive the electrode assembly;
electrode tabs which are connected with the electrodes and protrude to an outside of the case; and
a thermoelectric unit configured to at least partially cover the electrode tab,
wherein the thermoelectric unit comprises:
an insulator; and
a thermoelectric region which includes thermoelectric elements included in the insulator or attached to the insulator, and is disposed to be overlapped with the electrode tab in a planar direction,
wherein the thermoelectric unit partially covers the case together with the electrode tab in the planar direction.

2. The secondary battery according to claim 1, wherein the insulator comprises a first insulator which covers an upper surface of the electrode tab and a second insulator which covers a lower surface of the electrode tab, and
the thermoelectric region comprises a first thermoelectric region formed in the first insulator and a second thermoelectric region formed in the second insulator.

3. The secondary battery according to claim 2, wherein the thermoelectric unit further comprises a hinge part configured to couple the first insulator and the second insulator,
wherein the thermoelectric unit is folded through the hinge part so that the first thermoelectric region and the second thermoelectric region are disposed to face each other with the electrode tab interposed therebetween.

4. The secondary battery according to claim 2, wherein the thermoelectric unit further comprises a support disposed on the case to fix the thermoelectric unit.

5. The secondary battery according to claim 4, wherein the thermoelectric unit further comprises a third thermoelectric region including thermoelectric elements which are included in the support or attached to the support.

6. The secondary battery according to claim 5, wherein the third thermoelectric region covers a portion of the electrode tab included in the case in the planar direction.

7. The secondary battery according to claim 5, wherein the case comprises a sealing part fused with the electrode tab, and the third thermoelectric region covers the sealing part in the planar direction.

8. The secondary battery according to claim 5, wherein each of the electrodes comprises an electrode current collector and a notched part which protrudes from the electrode current collector and is connected with the electrode tab, and
the third thermoelectric region at least partially covers the notched part in the planar direction.

9. The secondary battery according to claim 1, wherein the thermoelectric unit further comprises a thermal conductive intermediate layer which is formed in the thermoelectric region, thus to be disposed between the electrode tab and the thermoelectric region.

10. The secondary battery according to claim 9, wherein the thermal conductive intermediate layer comprises thermal grease or heat transfer paste.

11. The secondary battery according to claim 1, wherein the thermoelectric element comprises a P-N diode.

## Patentansprüche

1. Eine Sekundärbatterie, umfassend:
eine Elektrodenanordnung, die eine Vielzahl von Elektroden und eine zwischen den Elektroden angeordnete Trennmembran umfasst;
ein Gehäuse, das zur Aufnahme der Elektrodenanordnung eingerichtet ist;
Elektrodenzungen, die mit den Elektroden verbunden sind und zur Außenseite des Gehäuses vorstehen; und
eine thermoelektrische Einheit, die so eingerichtet ist, dass sie die Elektrodenzunge zumindest teilweise bedeckt,
wobei die thermoelektrische Einheit umfasst:
einen Isolator; und
einen thermoelektrischen Bereich, der thermoelektrische Elemente enthält, die in dem Isolator enthalten oder an dem Isolator angebracht sind, und der so angeordnet ist, dass er sich mit der Elektrodenzunge in einer ebenen Richtung überlappt,
wobei die thermoelektrische Einheit das Gehäuse zusammen mit der Elektrodenzunge in der planaren Richtung teilweise bedeckt.

2. Sekundärbatterie nach Anspruch 1, wobei der Isolator einen ersten Isolator umfasst, der eine obere Fläche der Elektrodenzunge bedeckt, und einen zweiten Isolator, der eine untere Fläche der Elektrodenzunge bedeckt, und
der thermoelektrische Bereich einen ersten thermoelektrischen Bereich umfasst, der in dem ersten Isolator ausgebildet ist, und einen zweiten thermoelektrischen Bereich, der in dem zweiten Isolator ausgebildet ist.

3. Sekundärbatterie nach Anspruch 2, wobei die thermoelektrische Einheit außerdem ein Scharnierteil umfasst, das so eingerichtet ist, dass es den ersten Isolator und den zweiten Isolator verbindet,
wobei die thermoelektrische Einheit durch das Scharnierteil gefaltet wird, so dass der erste thermoelektrische Bereich und der zweite thermoelektrische Bereich so angeordnet sind, dass sie einander gegenüberliegen, wobei die Elektrodenzunge dazwischen angeordnet ist.

4. Sekundärbatterie nach Anspruch 2, wobei die thermoelektrische Einheit außerdem eine auf dem Gehäuse angeordnete Halterung zur Befestigung der thermoelektrischen Einheit umfasst.

5. Sekundärbatterie nach Anspruch 4, wobei die thermoelektrische Einheit außerdem einen dritten thermoelektrischen Bereich umfasst, der thermoelektrische Elemente enthält, die in der Halterung enthalten oder an der Halterung befestigt sind.

6. Sekundärbatterie nach Anspruch 5, wobei der dritte thermoelektrische Bereich einen Teil der Elektrodenzunge bedeckt, die in dem Gehäuse in der ebenen Richtung enthalten ist.

7. Sekundärbatterie nach Anspruch 5, wobei das Gehäuse ein mit der Elektrodenzunge verschmolzenes Dichtungsteil umfasst und der dritte thermoelektrische Bereich das Dichtungsteil in der ebenen Richtung bedeckt.

8. Sekundärbatterie nach Anspruch 5, wobei jede der Elektroden einen Elektrodenstromabnehmer und einen gekerbten Teil, der aus dem Elektrodenstromabnehmer herausragt und mit der Elektrodenzunge verbunden ist, umfasst, und
der dritte thermoelektrische Bereich den gekerbten Teil in der ebenen Richtung zumindest teilweise bedeckt.

9. Sekundärbatterie nach Anspruch 1, wobei die thermoelektrische Einheit außerdem eine wärmeleitende Zwischenschicht umfasst, die in dem thermoelektrischen Bereich ausgebildet ist, so dass sie zwischen der Elektrodenzunge und dem thermoelektrischen Bereich angeordnet ist.

10. Sekundärbatterie nach Anspruch 9, wobei die wärmeleitende Zwischenschicht ein Wärmeleitfett oder eine Wärmeübertragungspaste umfasst.

11. Sekundärbatterie nach Anspruch 1, wobei das thermoelektrische Element eine P-N-Diode umfasst.

## Revendications

1. Batterie secondaire, comprenant
un ensemble d'électrodes comprenant une pluralité d'électrodes et une membrane de séparation disposée entre les électrodes ;
un boîtier adapté pour recevoir l'ensemble d'électrodes ;
des lames d'électrodes reliées aux électrodes et faisant saillie vers l'extérieur du boîtier ; et
une unité thermoélectrique agencée de manière à recouvrir au moins partiellement la languette d'électrode ,
dans lequel l'unité thermoélectrique comprend
un isolateur ; et
une zone thermoélectrique qui comprend des éléments thermoélectriques contenus dans l'isolateur ou fixés à l'isolateur, et qui est agencée de manière à chevaucher la languette d'électrode dans une direction plane,
l'unité thermoélectrique recouvrant partiellement le boîtier conjointement avec la languette d'électrode dans la direction plane.

2. Batterie secondaire selon la revendication 1, dans laquelle l'isolateur comprend un premier isolateur qui recouvre une surface supérieure de la languette d'électrode et un deuxième isolateur qui recouvre une surface inférieure de la languette d'électrode, et
la zone thermoélectrique comprend une première zone thermoélectrique formée dans le premier isolant, et une seconde zone thermoélectrique formée dans le second isolant.

3. Batterie secondaire selon la revendication 2, dans laquelle l'unité thermoélectrique comprend en outre un élément de charnière pour relier le premier isolant et le deuxième isolant,
dans lequel l'unité thermoélectrique est pliée par l'élément de charnière de sorte que la première zone thermoélectrique et la seconde zone thermoélectrique sont disposées de manière à être opposées l'une à l'autre, la languette d'électrode étant disposée entre elles.

4. Batterie secondaire selon la revendication 2, dans laquelle l'unité thermoélectrique comprend en outre un support disposé sur le boîtier pour la fixation de l'unité thermoélectrique.

5. Batterie secondaire selon la revendication 4, dans laquelle l'unité thermoélectrique comprend en outre une troisième zone thermoélectrique contenant des éléments thermoélectriques qui sont contenus dans le support ou fixés au support.

6. Batterie secondaire selon la revendication 5, dans laquelle la troisième zone thermoélectrique recouvre une partie de la languette d'électrode contenue dans le boîtier dans la direction plane.

7. Batterie secondaire selon la revendication 5, dans laquelle le boîtier comprend un élément d'étanchéité fusionné avec la languette d'électrode et la troisième zone thermoélectrique recouvre l'élément d'étanchéité dans la direction plane.

8. Batterie secondaire selon la revendication 5, dans laquelle chacune desdites électrodes comprend un collecteur de courant d'électrode et une partie encochée faisant saillie dudit collecteur de courant d'électrode et reliée à ladite languette d'électrode, et
la troisième zone thermoélectrique recouvre au moins partiellement la partie entaillée dans la direction plane.

9. Batterie secondaire selon la revendication 1, dans laquelle l'unité thermoélectrique comprend en outre une couche intermédiaire conductrice de chaleur formée dans la région thermoélectrique de manière à être disposée entre la languette d'électrode et la région thermoélectrique.

10. Batterie secondaire selon la revendication 9, dans laquelle la couche intermédiaire conductrice de chaleur comprend une graisse conductrice de chaleur ou une pâte de transfert de chaleur.

11. Batterie secondaire selon la revendication 1, dans laquelle l'élément thermoélectrique comprend une diode P-N.
